# EUROPÄISCHE PATENTSCHRIFT

(11) **EP 1 721 119 B1**
(45) Veröffentlichungstag und Bekanntmachung des Hinweises auf die Patenterteilung: **05.01.2011**
(21) Anmeldenummer: 05707588.9
(22) Anmeldetag: 23.02.2005
(51) Int. Cl.: G01B 7/012, G01D 11/14

(54) **TASTKOPF FÜR EIN KOORDINATENMESSGERÄT**
PROBE FOR A CO-ORDINATES MEASURING APPLIANCE
TETE DE DETECTION POUR APPAREIL DE MESURE DE COORDONNEES

(30) Priorität: 05.03.2004 DE 102004011730
(43) Veröffentlichungstag der Anmeldung: 15.11.2006
(73) Patentinhaber: Carl Zeiss Industrielle Messtechnik GmbH, 73447 Oberkochen (DE)
(72) Erfinder: ENDERLE, Eckhard, 73434 Aalen (DE); HERB, Monika, 73447 Oberkochen (DE)
(74) Vertreter: Duhme, Torsten
(86) Internationale Anmeldenummer: PCT/EP2005/001867
(87) Internationale Veröffentlichungsnummer: WO 2005/088240

(56) Entgegenhaltungen:
- WO-A-2004/040233
- DE-A1- 3 625 636
- DE-A1- 4 424 225
- DE-A1- 19 731 005

## Beschreibung

Die vorliegende Erfindung betrifft einen Tastkopf für ein Koordinatenmessgerät, mit einem feststehenden ersten Teil und einem relativ dazu beweglichen zweiten Teil, insbesondere einen Taststift oder einen mit einem Taststift koppelbaren Zwischenelement, ferner mit einem Dämpfungsglied, das Schwingungen des beweglichen zweiten Teils bedämpft, wobei das Dämpfungsglied eine Magnetanordnung zum Erzeugen eines Magnetfeldes und ein Leiterelement aufweist, das entlang zumindest einer Bewegungsbahn relativ zu dem Magnetfeld beweglich ist.

Die Erfindung betrifft ferner ein Koordinatenmessgerät zum Vermessen einer Objektform eines Messobjekts, mit einem Verschiebegestell, an dem ein solcher Tastkopf mit einem Tastelement zum Antasten des Messobjekts angeordnet ist, und mit einer Auswerteeinheit, die dazu ausgebildet ist, eine aktuelle Raumposition des Tastelements zu bestimmen.

Ein solcher Tastkopf ist beispielsweise aus DE 197 31 005 A1 bekannt.

Gattungsgemäße Koordinatenmessgeräte dienen dazu, die Objekt-form eines Messobjekts mit hoher Genauigkeit zu vermessen. Eine typische Anwendung ist die Vermessung von maschinell hergestellten Werkstücken im Rahmen der laufenden Qualitätskontrolle in der Produktion. Die Objektform des Messobjekts wird vermessen, indem der Tastkopf über die Verschiebemechanik an definierte Punkte des Messobjekts herangefahren wird und anschließend die aktuelle Position des Tastkopfes bzw. eines mit ihm verbundenen Tastelements bestimmt wird. Bekannt ist es insbesondere, das Messobjekt mit einem am Tastkopf befestigten Taststift anzutasten, um das Auslesen der Raumkoordinaten auszulösen.

Der Taststift ist in aller Regel beweglich in oder an dem Tastkopf gelagert. Bei sog. schaltenden Tastköpfen öffnet der Taststift bei der Berührung mit der Objektform des Messobjekts einen Kontakt, der das Auslesen der Koordinaten bewirkt. Bei messenden Tastköpfen wird zudem auch noch die Auslenkung des Taststiftes aus seiner Ruhelage bestimmt, was eine besonders hohe Messgenauigkeit ermöglicht.

Die bewegliche Lagerung des Taststiftes kann beim Verfahren des Tastkopfes allerdings dazu führen, dass der Taststift in Eigenschwingungen gerät. Die Eigenschwingungen stören beim Anfahren des Messobjekts und können zu Messungenauigkeiten führen. Aus diesem Grunde ist es bekannt, den Taststift des Tastkopfes, allgemeiner das oder die beweglichen Teile innerhalb eines Tastkopfes, über ein im Tastkopf angeordnetes Dämpfungsglied zu bedämpfen, um die Schwingungen zu reduzieren, wenn nicht gar vollständig zu vermeiden.

Aus der eingangs genannten DE 197 31 005 A1 ist es bekannt, als Dämpfungsglied eine Wirbelstrombremse zu verwenden. Hierbei handelt es sich um eine Magnetanordnung mit einem Luftspalt, in dem ein metallisch leitfähiges Element, im konkreten Fall ein Kupferblech, angeordnet ist. Bewegt sich das Kupferblech in dem Magnetfeld, werden im Kupferblech Wirbelströme induziert, die ihrerseits ein Magnetfeld zur Folge haben. Das induzierte Magnetfeld wechselwirkt mit dem äußeren Magnetfeld und bewirkt dadurch eine Dämpfung ("Bremswirkung"). In einem Ausführungsbeispiel dieser Druckschrift ist der Tastkopf aus übereinandergesetzten Federparallelogrammen aufgebaut, die jeweils eine Bewegungsrichtung des Taststiftes ermöglichen. Jedes Federparallelogramm ist mit einer eigenen Wirbelstrombremse versehen. In einem weiteren Ausführungsbeispiel ist eine einzige Wirbelstrombremse vorgesehen, die den Taststift in z-Richtung und in x-Richtung bedämpft. Für die Dämpfung in y-Richtung wäre bei diesem Ausführungsbeispiel ggf. eine zweite, separate Wirbelstrombremse erforderlich.

Das Prinzip der Wirbelstrombremse zur Dämpfung von Schwingungen bei einem Tastkopf ist ferner auch aus DE 44 24 225 A1 bekannt, wobei der Tastkopf auch in diesem Fall aus übereinandergesetzten Federparallelogrammen aufgebaut ist, die jeweils eine eigene Wirbelstrombremse besitzen.

Aus DE 101 00 350 A1 ist ferner ein Tastkopf aus übereinandergesetzten Federparallelogrammen bekannt, bei dem als Dämpfungsglied eine Reibbremse zur Anwendung kommt, deren Reibkraft verstellt werden kann. Aus US 6,370,788 ist es bekannt, einen Gummizylinder oder, alternativ, Glasstaub als Dämpfungselement zu verwenden. Ferner ist es aus DE 101 47 614 A1 bekannt, bei einem Koordinatenmessgerät einen Viskosedämpfer, d.h. ein viskoses Medium als Dämpfungselement, einzusetzen.

Auf einem gänzlich anderen technischen Gebiet, nämlich der dynamischen Bedämpfung von Gebäudevibrationen, die von Erdbeben ausgelöst werden, ist es bekannt, ein Ausgleichsgewicht über konzentrisch zueinander angeordnete Magnete wechselnder Polarität zu lagern (US 5,445,249).

Vor diesem Hintergrund ist es eine Aufgabe der vorliegenden Erfindung, einen Tastkopf der eingangs genannten Art so weiterzubilden, dass eine effiziente Dämpfung bei kompakter Bauform des Tastkopfes möglich ist. Darüber hinaus ist es wünschenswert, den Dämpfungsgrad möglichst flexibel einstellbar zu machen.

Die genannte Aufgabe wird nach einem Aspekt der Erfindung gemäß Anspruch 1 dadurch gelöst, dass die Magnetanordnung bei dem eingangs genannten Tastkopf so ausgebildet ist, dass entlang der zumindest einen Bewegungsbahn zumindest ein Richtungswechsel des Magnetfeldes auftritt.

Der neue Tastkopf besitzt hiernach also eine Magnetanordnung, die so ausgebildet ist, dass das Leiterelement bei seiner Bewegung Magnetfeldlinien ausgesetzt ist, die spürbar unterschiedliche Richtungen aufweisen. Im Gegensatz dazu war es bei den bislang bekannten Wirbelstrombremsen für Tastköpfe üblich, das bewegliche Leiterelement in einem homogenen Magnetfeld mit Feldlinien gleicher oder zumindest nahezu gleicher Richtung zu bewegen. Der erfindungsgemäße Richtungswechsel des Magnetfeldes bei der Bewegung des Leiterelements führt zu einer erhöhten Dämpfungswirkung. Daher lässt sich der erforderliche Bauraum für die Magnetanordnung bei gleicher Dämpfungswirkung reduzieren oder es kann bei gleichem Bauraum eine größere Dämpfungswirkung erreicht werden. Die verbesserte Dämpfungswirkung ermöglicht es zudem, den Taststift (allgemeiner: das bewegliche Teil; das hiesige Prinzip kann nämlich auch zur Schwingungsdämpfung anderer beweglicher Teile in einem Tastkopf eingesetzt werden, wie beispielsweise Zwischenelemente zwischen Gehäuse und Taststift) in mehreren Koordinatenrichtungen über ein zentrales Dämpfungsglied effizient und raumsparend zu bedämpfen. Die Zusammenführung der Dämpfung mehrerer Koordinatenrichtungen, vorzugsweise sogar aller Koordinatenrichtungen, ermöglicht eine Verringerung des benötigten Bauraums und der Teileanzahl. Der neue Tastkopf kann daher sehr kompakt realisiert werden. Außerdem führt die Reduktion der Teileanzahl zu einer Gewichtsersparnis, was schnellere und dynamischere Bewegungen und damit höhere Messgeschwindigkeiten erlaubt.

Die erhöhte Dynamik, die ihrerseits natürlich das Risiko stärkerer Schwingungen zur Folge hat, wird außerdem durch das verbesserte Dämpfungsverhalten der neuen Anordnung erreichbar. Darüber hinaus ist die erfindungsgemäße Lösung sehr flexibel, da die Häufigkeit und die spezielle Ausbildung der Richtungswechsel eine variable Einstellung der Dämpfungswirkung ermöglicht.

Die genannte Aufgabe ist daher vollständig gelöst.

In einer bevorzugten Ausgestaltung ist der Richtungswechsel eine quer zur Bewegungsbahn auftretende Richtungsumkehr.

In dieser Ausgestaltung durchläuft das bewegliche Leiterelement also Magnetfeldlinien entgegengesetzter Richtung, was die Dämpfungswirkung besonders steigert. Die zuvor genannten Vorteile wirken sich in dieser Ausgestaltung besonders aus.

In einer weiteren Ausgestaltung beinhaltet die Magnetanordnung eine Vielzahl von Magneten, die über ein Magnetflussführungselement miteinander verbunden sind.

Als Magnetflussführungselement kommt insbesondere ein Weicheisenkern zur Anwendung, wie dies für sich genommen zum Aufbau von Magnetanordnungen bekannt ist. Die Ausgestaltung besitzt zum einen den Vorteil, dass die Magnetanordnung nach außen hin magnetisch neutral ist, da das Magnetflussführungselement die magnetischen Feldlinien weitgehend in sich konzentriert. Darüber hinaus ist diese Ausgestaltung auf Grund der Vielzahl der Magnete besonders variabel in Bezug auf die Dämpfungswirkung. Die Vielzahl der Magnete ermöglicht Variationen hinsichtlich der Anzahl der Richtungswechsel, der Größe des magnetisch wirksamen Bereichs und der Stärke des Magnetfeldes selbst. Darüber hinaus ermöglicht die Zusammenführung einer Vielzahl von Magneten über ein Magnetflussführungselement eine besonders raumsparende und kompakte Anordnung.

In einer weiteren Ausgestaltung beinhaltet die Magnetanordnung austauschbare Magneten.

Diese Ausgestaltung ist besonders vorteilhaft im Hinblick auf die Flexibilität. Die austauschbaren Magneten ermöglichen Variationen hinsichtlich des verwendeten magnetischen Materials, der Anzahl, Ausrichtung und Stärke der Magneten. Damit lässt sich die Dämpfung auch später noch an ein Koordinatenmessgerät adaptieren, beispielsweise an verschiedene Taststiftgewichte und Taststiftlängen. Außerdem kann die Herstellung rationalisiert werden.

In einer weiteren Ausgestaltung, die auch für sich allein genommen eine erfinderische Lösung der oben genannten Aufgabe darstellt, weist das Dämpfungsglied zumindest ein erstes und ein zweites Leiterelement auf, die um das bewegliche zweite Teil herum an zumindest zwei umfänglich zueinander versetzten Positionen angeordnet sind.

Mit anderen Worten sind das erste und zweite Leiterelement (und ggf. weitere Leiterelemente, die einstückig miteinander verbunden oder getrennt realisiert sein können) in einem radialen Abstand zu dem beweglichen zweiten Teil an dessen Außenumfang verteilt angeordnet. Sie besitzen dementsprechend verschiedene Umfangspositionen in Bezug auf das bewegliche zweite Teil. Wenn die Zahl der Leiterelemente auf zwei begrenzt ist, sind diese vorzugsweise um 90° zueinander umfänglich versetzt, was eine Dämpfung des beweglichen Teils in zwei Koordinatenrichtungen mit einer geringen Anzahl an Bauteilen ermöglicht. In einer alternativen, gleichfalls bevorzugten Ausgestaltung sind die beiden Leiterelemente um 180° zueinander umfänglich versetzt, um eine hohe Dämpfungswirkung in einer Koordinatenrichtung sowie eine symmetrische Gewichtsverteilung zu erhalten.

Die bevorzugte Ausgestaltung führt zu einer besonders kompakten Bauform. Außerdem lassen sich damit Schwingungen quer zur Ausrichtung des Taststiftes, üblicherweise also in x- und y-Richtung, sehr effizient bedämpfen. Derartige Schwingungen wirken sich beim Verfahren des Tastkopfes besonders negativ aus.

In einer weiteren Ausgestaltung sind drei oder vier Leiterelemente gleichmäßig verteilt um das zweite Teil herum angeordnet.

Diese Ausgestaltung ist besonders vorteilhaft, um Schwingungen in zwei Raumrichtungen einer Ebene, insbesondere der x-y-Ebene, mit einer kompakten und raumsparenden Anordnung zu bedämpfen. Die Verwendung von drei Leiterelementen besitzt auf Grund der geringeren Teileanzahl den Vorteil eines geringeren Gewichts. Auch der Aufwand und die Kosten der Herstellung sind hierdurch reduziert. Die Verwendung von vier Leiterelementen besitzt demgegenüber den Vorteil, dass die zwei Raumrichtungen einer Ebene mit unterschiedlicher Dämpfungswirkung bedämpft werden können, was die Flexibilität und Adaptierbarkeit weiter verbessert.

In einer weiteren Ausgestaltung sind das erste und zweite Leiterelement separate Leiterelemente.

Mit anderen Worten sind das erste und zweite Leiterelement (und ggf. die weiteren Leiterelemente) räumlich getrennte Teile. Diese Ausgestaltung erleichtert den Austausch einzelner Leiterelemente und die Anpassung an unterschiedliche Dämpfungsanforderungen in verschiedenen Raumrichtungen.

In einer weiteren Ausgestaltung besitzt der neue Tastkopf ein Federelement, insbesondere eine sog. Membranfeder, wie sie an sich bei Tastköpfen bereits bekannt ist, wobei das zweite Teil mit dem Federelement relativ zu dem ersten Teil beweglich gelagert ist, wobei das Federelement eine Bewegungsebene definiert und wobei das Leiterelement in einem orthogonalen Abstand zu der Bewegungsebene angeordnet ist.

In dieser Ausgestaltung ist das bewegliche Leiterelement über einen Hebelarm von der Bewegungsebene ("Kardanebene") des zweiten Teils beabstandet. Dies führt dazu, dass das Leiterelement auch bei geringen Ausschlägen des zweiten Teils relativ große Bewegungshübe ausführt. Ein großer Bewegungshub und die damit verbundene hohe Geschwindigkeit haben eine weitere Steigerung der Dämpfungswirkung zur Folge. Diese Ausgestaltung ist damit sehr effizient.

In einer alternativen Ausgestaltung ist das Leiterelement demgegenüber auf Höhe der Bewegungsebene angeordnet.

In dieser Ausgestaltung sind die Bewegungshübe des Leiterelements bei den Schwingungen des zweiten Teils relativ klein. Die geringen Bewegungshübe ermöglichen es andererseits, den Luftspalt in der Magnetanordnung, in dem sich das Leiterelement bewegt, sehr eng zu halten, was eine hohe magnetische Feldstärke im Luftspalt zur Folge hat. Die hierdurch bewirkte Effizienzsteigerung ermöglicht besonders kompakte Bauformen.

In einer weiteren Ausgestaltung besitzen die Magnetanordnung und das Leiterelement unterschiedliches Gewicht, wobei das Schwerere der beiden an dem ersten Teil befestigt ist. Bevorzugt ist das Leiterelement an dem beweglichen Teil befestigt.

Die Ausgestaltung vermeidet oder reduziert zumindest eine Beeinträchtigung der Dynamik. Mit anderen Worten wird bei dem neuen Tastkopf eine höhere Dynamik erreicht, wenn das jeweils leichtere Element des Dämpfungsgliedes, in der Regel das Leiterelement, an dem beweglichen zweiten Teil befestigt ist. Sollte das Leiterelement jedoch das schwerere Element sein, ist es bevorzugt, die Anordnung entsprechend zu vertauschen.

In einer weiteren Ausgestaltung ist das Leiterelement austauschbar ausgebildet.

Diese Ausgestaltung ermöglicht eine besonders leichte Anpassung der Dämpfungswirkung, indem Leiterelemente verschiedener Masse, bzw. aus verschiedenen Materialien und verschiedener Größe, zum Einsatz kommen. Beispielsweise ist Kupfer bevorzugt, da es eine sehr hohe elektrische Leitfähigkeit besitzt und die Wirbelströme daher stark ausgeprägt sind. Aluminium ist demgegenüber leichter, führt jedoch zu einer etwas geringeren Dämpfung. Die Austauschbarkeit der Leiterelemente erhöht die Variationsvielfalt und Adaptierbarkeit des neuen Tastkopfes.

In einer weiteren Ausgestaltung besteht das Leiterelement überwiegend aus Aluminium oder überwiegend aus Kupfer.

Die beiden genannten Alternativen besitzen die bereits erwähnten Vor- und Nachteile, wobei unter der Vielzahl der insgesamt zur Verfügung stehenden Materialien diese beiden Elemente auf Grund ihrer Eigenschaften besonders bevorzugt sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Koordinatenmessgerät mit dem neuen Tastkopf in einer vereinfachten Gesamtansicht,
- Fig. 2: den strukturellen Grundaufbau eines Ausführungsbei- spiels des neuen Tastkopfes in einer teilweise ge- schnittenen, perspektivischen Darstellung,
- Fig. 3 und 4: zwei prinzipielle Darstellungen von Magnetanordnungen zur Erläuterung eines Aspekts der vorliegenden Erfin- dung,
- Fig. 5: ein Dämpfungsglied gemäß einem Ausführungsbeispiel des neuen Tastkopfs in einer teilweise geschnittenen, per- spektivischen Darstellung,
- Fig. 6: ein weiteres Dämpfungsglied für ein alternatives Aus- führungsbeispiel des neuen Tastkopfes,
- Fig. 7: das Dämpfungsglied aus Fig. 6 in einer explosionsarti- gen Darstellung, und
- Fig. 8: ein weiteres Ausführungsbeispiel für ein Dämpfungsglied des neuen Tastkopfes.

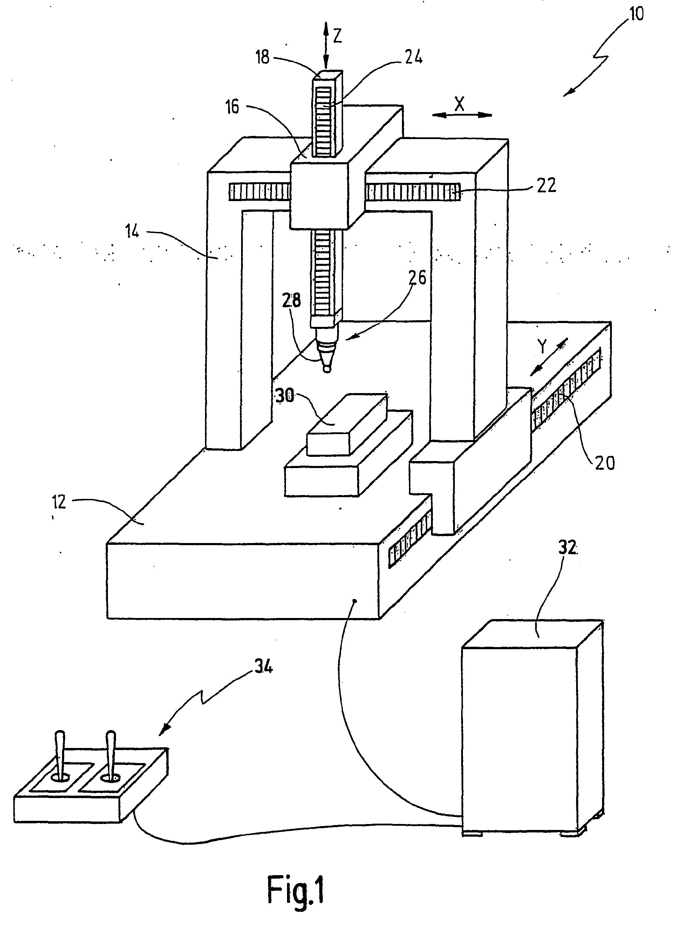

In Fig. 1 ist ein Koordinatenmessgerät in seiner Gesamtheit mit der Bezugsziffer 10 bezeichnet. Das Koordinatenmessgerät 10 besitzt eine Grundplatte 12, auf der ein Portal 14 in einer Längsrichtung verschieblich angeordnet ist. Die Längsrichtung wird üblicherweise als y-Achse bezeichnet. Am oberen Querträger des Portals 14 ist ein in x-Richtung verschieblicher Schlitten 16 angeordnet, der wiederum eine in z-Richtung verstellbare Pinole 18 trägt. Mit den Bezugsziffern 20, 22, 24 sind Skalen bezeichnet, an denen sich die jeweilige Verstellposition des Portals 14, des Schlittens 16 und der Pinole 18 in den drei Raumrichtungen x, y und z ablesen lässt. Die Skalen 20, 22, 24 können dabei typische Messskalen sein, die von einem Bediener des Koordinatenmessgerätes 10 abgelesen werden. Alternativ und/oder ergänzend kann es sich hier jedoch auch um Wegmessgeber handeln, die maschinell ausgelesen werden können.

Am unteren freien Ende der Pinole 18 ist in an sich bekannter Weise ein Tastkopf 26 angeordnet, der einen hier nicht-maßstabsgetreu dargestellten Taststift 28 trägt. Mit dem Taststift 28, der auch eine andere Form als hier dargestellt besitzen kann, werden definierte Messpunkte eines Messobjekts 30 angetastet. Das Messobjekt 30 ist dabei auf der Grundplatte 12 des Koordinatenmessgerätes 10 angeordnet. Die Stellung des Tastkopfes 26 und ggf. des Taststiftes 28 lassen sich an Hand der Skalen 20, 22, 24 und ggf. weiterer, im Tastkopf 26 angeordneter Messelemente (hier nicht dargestellt) bestimmen. Damit kann die Objektform des Messobjektes 30 mit der durch das Koordinatenmessgerät 10 vorgegebenen Genauigkeit vermessen werden.
Mit der Bezugsziffer 32 ist eine Auswerte- und Steuereinheit bezeichnet, über die das Koordinatenmessgerät 10 gesteuert wird. Des Weiteren wertet die Auswerte- und Steuereinheit 32 die jeweilige Position von Tastkopf 26 und Taststift 28 aus, und sie stellt die Messergebnisse zur Dokumentation und/oder weiteren Verarbeitung bereit. Bei automatisch arbeitenden Koordinatenmessgeräten ist die Auswerte- und Steuereinheit 32 häufig eine sogenannte CNC-Steuereinheit.

Mit der Bezugsziffer 34 ist ein Bedienpult bezeichnet, über das das Koordinatenmessgerät 10 hier auch manuell gesteuert werden kann. Steuereinheit 32 und Bedienpult 34 sind hier allerdings lediglich der Vollständigkeit halber dargestellt und können in anderen Ausführungsbeispielen auch entfallen oder durch andere Komponenten ersetzt sein.

Des Weiteren ist das hier in Portalbauweise dargestellte Koordinatenmessgerät 10 nur beispielhaft gewählt. Die Erfindung kann gleichermaßen bei Koordinatenmessgeräten in Horizontalarmbauweise oder auch bei anderen Bauformen Anwendung finden.

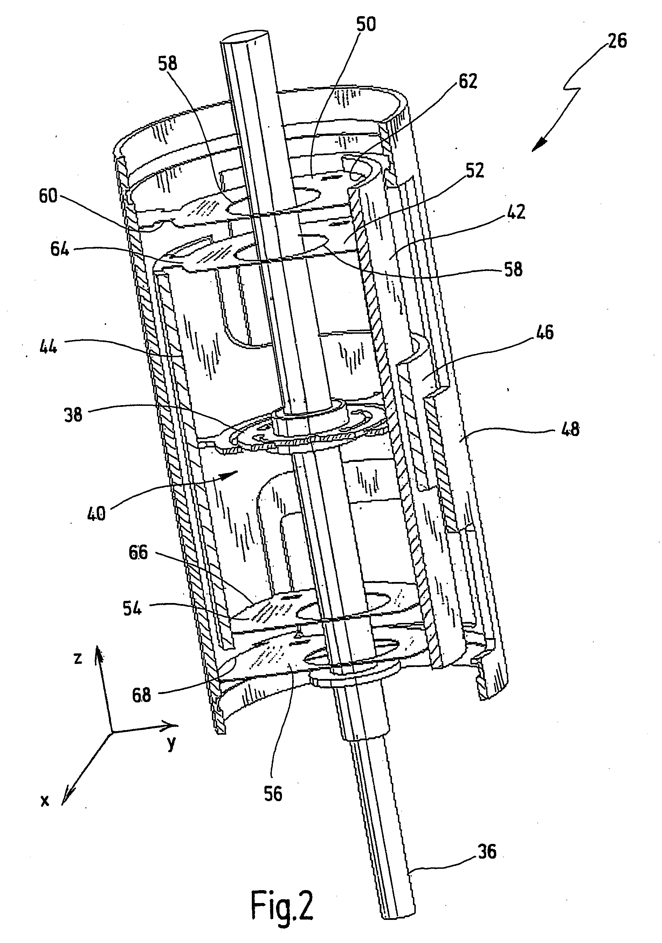

In Fig. 2 ist das sog. Kinematikmodul eines bevorzugten Ausführungsbeispiels des Tastkopfes 26 dargestellt. Das Kinematikmodul umfasst diejenigen Teile, die die kontrollierte Auslenkung des Taststiftes 28 beim Antasten des Messobjekts 30 ermöglichen. Es versteht sich, dass der Taststift 28 nicht unmittelbar mit dem Kinematikmodul verbunden sein muss, sondern in aller Regel über eine Taststiftverlängerung 36 an dem Kinematikmodul angeordnet ist. Dies ermöglicht es insbesondere, den verwendeten Taststift 28 am Tastkopf 26 auszuwechseln, wie dies an sich bereits von gattungsgemäßen Koordinatenmessgeräten bekannt ist.

Das Kinematikmodul des neuen Tastkopfes 26 besitzt hier eine zylindrische Bauform, in deren Mitte eine Membranfeder 38 angeordnet ist. Die Taststiftverlängerung 36 wird über die Membranfeder 38 so gehalten, dass sich die Taststiftverlängerung 36 (und mit ihr der Taststift 28) sowohl in Richtung der x-Achse als auch in Richtung der y-Achse bewegen (verschwenken) kann.

Die Membranfeder 38 ist in ein Trägerelement 40 eingespannt, das sich in die zylindrische Bauform des Tastkopfes 26 einpasst. Das Trägerelement 40 besitzt einen zylinderhalbschalenförmigen Teil 44, der diametral einem Zwischenelement 42 gegenüber liegt. Außerdem besitzt das Trägerelement 40 einen ringartigen Fortsatz 46, der die Membranfeder 38 und das Zwischenelement 42 ringförmig umgreift. Dabei kann sich das Zwischenelement 42 zwischen der Membranfeder 38 und dem Fortsatz 46 bewegen. In der axialen Ausdehnung ist das Teil 44 kleiner als das Zwischenelement 42 und mittig zu dem Letzteren angeordnet.

Um das Trägerelement 40 herum ist ein zylindrisches Gehäuseteil 48 angeordnet. Das Gehäuseteil 48 umgibt auch die Taststiftverlängerung 36 konzentrisch. Gehäuseteil 48 und die beiden Elemente 40, 42 sind zudem über insgesamt vier Federelemente 50, 52, 54, 56 miteinander verbunden. Die Federelemente 50 bis 56 sind jeweils als Blattfedern ausgebildet und sie liegen parallel zu der Membranfeder 38. Um den Durchtritt der Taststiftverlängerung 36 zu ermöglichen, besitzen die vier Federelemente 50 bis 56 jeweils eine etwa kreisförmige, mittige Ausnehmung 58. Durch diese hindurch erstreckt sich die Taststiftverlängerung 36.

Die Federelemente 50 und 52 sind in Richtung der z-Achse oberhalb der Membranfeder 38 angeordnet. Die Federelemente 54, 56 liegen in Richtung der z-Achse unterhalb der Membranfeder 38, wobei sie in etwa denselben Abstand zu der Membranfeder 38 besitzen wie die Federelemente 50, 52. Das Federelement 50 verbindet das feststehende Gehäuseteil 48 mit dem Zwischenelement 42. Das Federelement 52, das etwas unterhalb des Federelements 50 angeordnet ist, verbindet das Zwischenelement 42 mit dem Teil 44 des Trägerelements 40.

In ähnlicher Weise verbindet das Federelement 54 das Teil 44 des Trägerelements 40 mit dem diametral gegenüberliegenden Zwischenelement 42. Das Federelement 56, das etwas unterhalb des Federelements 54 angeordnet ist, verbindet schließlich das Zwischenelement 42 nochmals mit dem feststehenden Gehäuseteil 48. Durch diese Anordnung bilden die Elemente 40, 42 zusammen mit den Federelementen 50 bis 56 ein sog. Doppelfederparallelogramm in zylindrischer Bauform. Dieses ermöglicht eine Auslenkung der Taststiftverlängerung 36 in z-Richtung.

Eine Besonderheit des hier gezeigten Kinematikmoduls, die für sich genommen Gegenstand einer parallelen Anmeldung der vorliegenden Anmelderin ist, besteht darin, dass die Federelemente 50 bis 56 jeweils mit einer Dreipunktlagerung an den Elementen 40, 42 bzw. dem Gehäuseteil 48 befestigt sind. Anders ausgedrückt sind die Federelemente 50 bis 56 mit jeweils einem der Teile über eine eindimensionale oder singuläre Kontaktstelle und mit dem jeweils anderen der Teile über eine zweidimensionale (linien- oder punktlinienförmige) Kontaktstelle verbunden. Insbesondere ist hier das Federelement 50 über eine eindimensionale, d.h. weitgehend punktförmige Kontaktstelle 64 an dem Gehäuseteil 48 befestigt, während es über eine linienförmige Kontaktstelle 62 an dem Element 42 sitzt. Gleichermaßen ist das Federelement 52 über eine linienförmige/zweidimensional ausgebildete Kontaktstelle an dem Element 42 angeordnet, während es über eine eindimensionale/punktförmige/singuläre Kontaktstelle 64 an dem Teil 44 des Trägerelements 40 sitzt.

In gleicher Weise ist das Federelement 54 über eine zweidimensionale/linienförmige Kontaktstelle 66 an dem Trägerelement 40 befestigt, während es über eine eindimensionale/punktförmige Kontaktstelle (in der Darstellung in Fig. 2 nicht zu sehen) an dem Zwischenelement 42 sitzt. Des Weiteren ist auch das Federelement 56 über eine eindimensionale/punktförmige Kontaktstelle (hier ebenfalls nicht zu sehen) an dem Zwischenelement 42 befestigt, während es über eine linienförmige/zweidimensionale Kontaktstelle 68 an dem Gehäuseteil 48 sitzt.

Die auch für sich genommen neuartige Dreipunktlagerung der Federelemente 50 bis 56 in diesem Doppelfederparallelogramm besitzt den Vorteil, dass die einzelnen Federelemente einfacher und mit größeren Toleranzen hergestellt und montiert werden können, ohne dass es zu Verspannungen und im Extremfall zu einem "Schnappen" der Federelemente kommen kann. Vorteilhafterweise ist hier auch die Membranfeder 38 über eine Dreipunktlagerung in das Trägerelement 40 eingespannt.

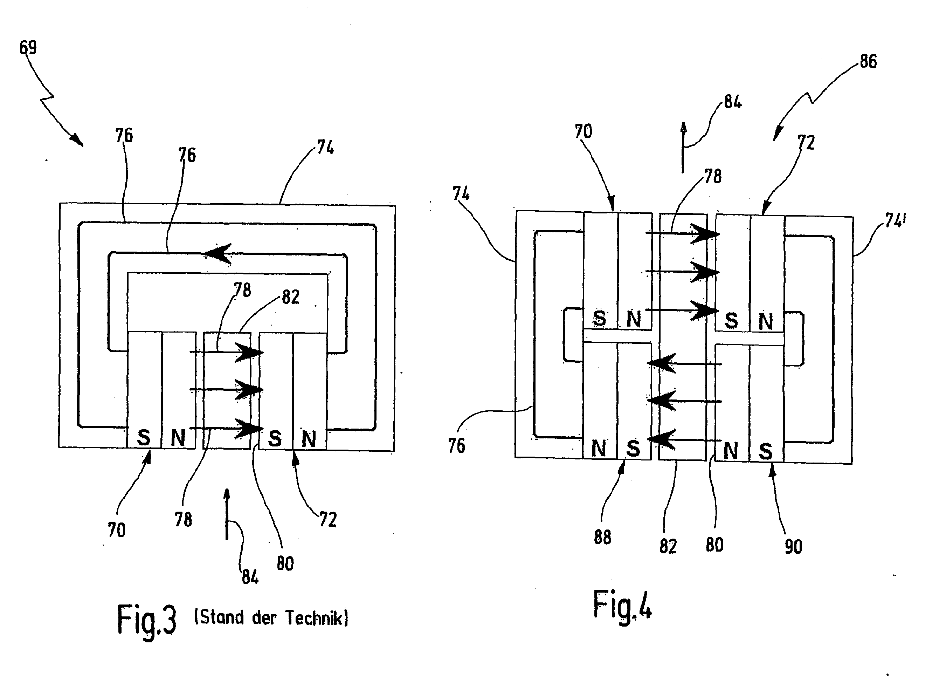

Das in Fig. 2 gezeigte Kinematikmodul wird für den neuen Tastkopf 26 mit einem der nachfolgend beschriebenen Dämpfungsglieder kombiniert. Zuvor sei jedoch an Hand der Fig. 3 und 4 ein bevorzugter Aspekt schematisch erläutert.

In Fig. 3 ist eine Magnetanordnung 69 mit zwei Magneten 70, 72 und einem U-förmigen Flussführungselement 74 dargestellt. Die beiden Magnete 70, 72 sind an den Innenseiten der offenen Schenkel des U-förmigen Flussführungselements 74 angeordnet, und zwar so, dass die beiden Nord- bzw. Südpole dieselbe Orientierung besitzen. Dadurch bildet sich ein Magnetfeld aus, das hier an Hand der Feldlinien 76, 78 schematisch dargestellt ist. In dem Luftspalt 80 zwischen den beiden Magneten 70, 72 herrscht eine hohe Feldstärke. Im Übrigen werden die Feldlinien 76 über das Flussführungselement 74 vom Magneten 72 zum Magneten 70 geführt und damit geschlossen. Die Gesamtanordnung ist nach außen hin magnetisch weitgehend neutral, da das Flussführungselement 74 die magnetischen Feldlinien 76 auf Grund seines geringen magnetischen Widerstandes in seinem Inneren konzentriert.

Mit der Bezugsziffer 82 ist ein Leiterelement bezeichnet, beispielsweise also ein Kupferblech, das in dem Luftspalt 80 der Magnetanordnung 69 in Richtung des Pfeils 84 beweglich ist. Das Leiterelement 82 bewegt sich damit quer zu den Feldlinien 78 im Luftspalt 80. Durch diese Bewegung werden in dem Leiterelement 82 Wirbelströme induziert, die ihrerseits ein Magnetfeld hervorrufen, das mit dem Magnetfeld 76, 78 wechselwirkt. Auf Grund dieser Wechselwirkung wird die Bewegung des Leiterelements 82 in dem Luftspalt 80 gebremst.

In Fig. 4 ist eine vergleichbare Magnetanordnung 86 gezeigt, wobei gleiche Bezugszeichen jeweils dieselben Elemente bezeichnen wie zuvor. Im Unterschied zu der Magnetanordnung 69 besitzt die Magnetanordnung 86 hier jedoch vier Magnete 70, 72, 88, 90, wobei die Magnete 70, 88 über ein erstes Flussführungselement 74 und die Magnete 72, 90 über ein zweites Flussführungselement 74' verbunden sind. Dabei liegen sich die Magnete 70, 72 genauso gegenüber, wie bei der Anordnung 69 gemäß Fig. 3. Die Magnete 88 und 90 liegen sich in gleicher Weise gegenüber, so dass insgesamt ein durchgehender Luftspalt 80 gebildet wird, der die Magnetanordnung 86 in zwei Hälften teilt. Lediglich die Orientierung der Magnete 70, 88 bzw. 72, 90 ist umgekehrt.

Auch bei der Magnetanordnung 86 entsteht ein geschlossener Feldlinienverlauf, der sich im Wesentlichen auf den Luftspalt 80 sowie das Innere der Flussführungselemente 74, 74' konzentriert. Allerdings erfährt das Leiterelement 82 hier bei seiner Bewegung im Luftspalt 80 einen Richtungswechsel der Feldlinien, wie dies in Fig. 4 dargestellt ist. Durch diesen Richtungswechsel werden Wirbelströme in unterschiedlicher Richtung in dem Leiterelement 82 induziert, was letztlich zu einer erhöhten Bremswirkung führt. Dieser Effekt wird bei den nachfolgend beschriebenen Ausführungsbeispielen für ein Dämpfungsglied ausgenutzt.

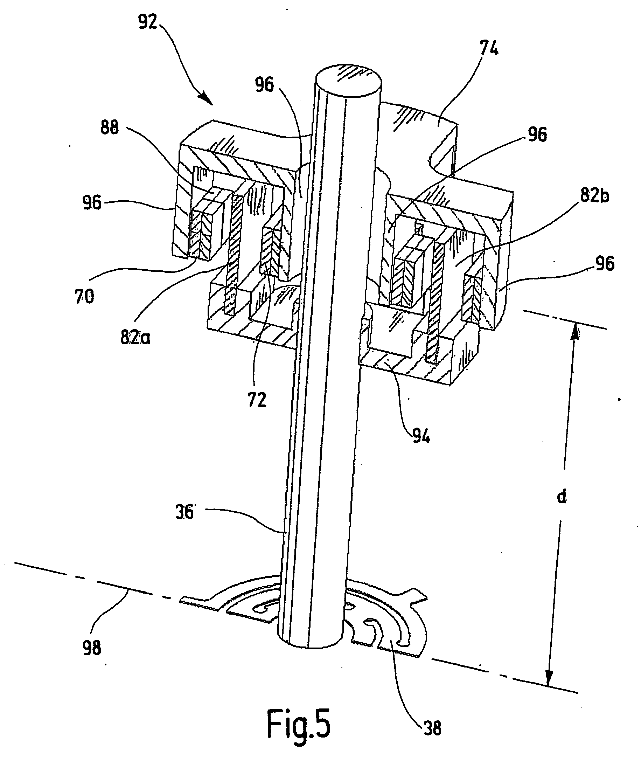

In Fig. 5 ist ein Dämpfungsglied für ein erstes Ausführungsbeispiel des neuen Tastkopfes in seiner Gesamtheit mit der Bezugsziffer 92 bezeichnet. Das Dämpfungsglied 92 wird an dem Kinematikmodul aus Fig. 2 am oberen freien Ende der Taststiftverlängerung 36 angebracht. Aus Gründen der Übersichtlichkeit sind in der Darstellung in Fig. 5 nur die Membranfeder 38 und das obere Ende der Taststiftverlängerung 36 dargestellt.

Das Dämpfungsglied 92 beinhaltet hier insgesamt vier Leiterelemente 82, von denen in der Darstellung in Fig. 5 zwei Leiterelemente (Bezugszeichen 82a, 82b) zu erkennen sind. Die beiden übrigen Leiterelemente sitzen um 90° versetzt. Insgesamt sind die vier Leiterelemente 82 damit um jeweils 90° versetzt zueinander auf einer Umfangslinie verteilt angeordnet.

Die Leiterelemente 82 sind über ein Trägerelement 94 an der Taststiftverlängerung 36 befestigt. Sie umgeben die Taststiftverlängerung 36 in einem radialen Abstand, wobei die vier Leiterelemente 82 gleichmäßig um die Taststiftverlängerung 36 herum angeordnet sind. Mit anderen Worten liegen die Leiterelemente 82a und 82b diametral auf zwei Seiten der Taststiftverlängerung 36 zueinander. In gleicher Weise liegen die hier nicht dargestellten weiteren Leiterelemente diametral zueinander, jedoch um 90° versetzt zu den Leiterelementen 82a, 82b.

Das Flussführungselement 74 besitzt eine kreuzartige Dachfläche mit jeweils U-förmig nach unten weisenden Schenkeln an jedem Arm des Kreuzes. An den aufeinanderzuweisenden Innenseiten der U-förmigen Schenkel sind jeweils Magnete 70, 72, 88, 90 angeordnet. Die gesamte Anordnung aus Flussführungselement 74 und den Magneten 70, 72, 88, 90 ist gewissermaßen über die Leiterelemente 82 "übergestülpt". Dabei ist die Anordnung aus Flussführungselement 74 und den Magneten ortsfest, so dass sich die Leiterelemente 82 bei einer Bewegung der Taststiftverlängerung 36 relativ dazu bewegen.

Im konkreten Fall können sich die Leiterelemente 82 in allen drei Raumrichtungen x, y und z relativ zu den Magneten 70, 72, 88, 90 bewegen. Daher ist das Dämpfungsglied 92 in der Lage, Schwingungen der Taststiftverlängerung 36 (und damit des Taststiftes 28) in allen drei Raumrichtungen zu bedämpfen. Durch geeignete Auswahl und Dimensionierung der Leiterelemente 82 sowie der Anzahl, Anordnung und Auswahl der Magnete kann die Dämpfungswirkung in allen drei Raumrichtungen individuell optimiert werden.

Insgesamt ist das Dämpfungsglied 92 hier in einem Abstand d oberhalb der x-y-Bewegungsebene (Kardanebene) 98 angeordnet, die durch die Membranfeder 38 festgelegt wird. Dies hat zur Folge, dass Ausschläge des Taststiftes 28 in x- oder y-Richtung relativ große Bewegungshübe der Leiterelemente 82 und damit relativ hohe Bewegungsgeschwindigkeiten zur Folge haben, wodurch die Dämpfungswirkung gesteigert wird. Dies ist in der gezeigten Anordnung besonders vorteilhaft, da die Luftspalte zwischen den Magneten 70, 72, 88, 90 hier relativ groß gewählt werden müssen, um eine Bewegung der Leiterelemente 82 in allen drei Raumrichtungen zu ermöglichen.

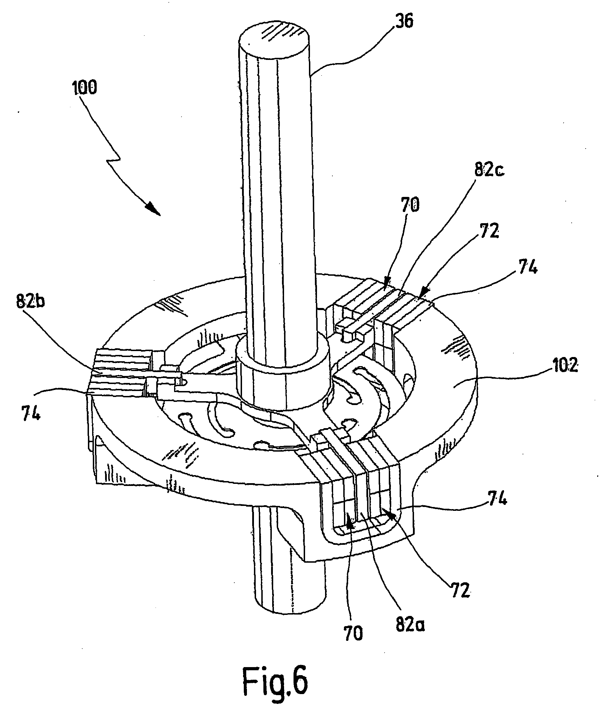

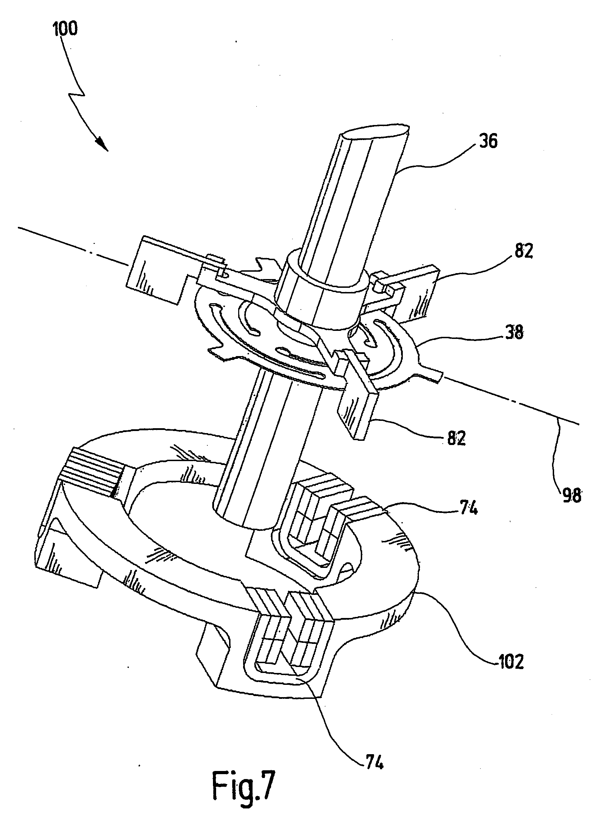

In den Fig. 6 und 7 ist ein weiteres Ausführungsbeispiel eines Dämpfungsgliedes für den neuen Tastkopf in seiner Gesamtheit mit der Bezugsziffer 100 bezeichnet. Das Dämpfungsglied 100 wird im Unterschied zu dem Dämpfungsglied 92 praktisch in der x-y-Bewegungsebene angeordnet, die durch die Membranfeder 38 aufgespannt wird. Es besitzt hier drei Leiterelemente 82, die gleichmäßig um die Taststiftverlängerung 36 herum angeordnet sind, d.h. in einem Umfangswinkel von jeweils 120° zueinander versetzt sind. Wie bei dem Dämpfungsglied 92 bewegen sich die Leiterelemente 82 hier mit der Taststiftverlängerung 36 mit.

Das Dämpfungsglied 100 besitzt des Weiteren ein ringförmiges Trägerelement 102, das die Taststiftverlängerung 36 konzentrisch umgibt. In das ringförmige Trägerelement 102 sind drei Magnetanordnungen mit Magneten 70, 72 und einem Magnetflussführungselement 74 eingelassen. Die Positionen der drei Magnetanordnungen entsprechen denen der drei Leiterelemente 82. Bei einer Auslenkung des Taststiftes 28 bewegen sich die Leiterelemente 82 relativ zu der entsprechenden Magnetanordnung, wodurch wiederum die Dämpfungswirkung erreicht wird. Durch Auswahl der Masse und des verwendeten Materials der Leiterelemente sowie Anordnung, Auswahl und Stärke der Magneten 70, 72 kann auch hier die Dämpfungswirkung auf den jeweiligen Anwendungsfall optimiert werden. Da die Bewegungshübe der Leiterelemente 82 bei dem Dämpfungsglied 100 relativ klein sind im Vergleich zu dem Dämpfungsglied 92, können die Luftspalte sehr eng, d.h. nahezu passgenau zu den Leiterelementen 82 dimensioniert werden. Dies verstärkt die Dämpfungswirkung.

Das Dämpfungsglied 100 dient in dem bevorzugten Tastkopf zur Dämpfung einer Schwingung in x- oder y-Richtung, wenngleich die gezeigte Anordnung grundsätzlich auch eine Dämpfung in z-Richtung ermöglichen würde.

Der Vollständigkeit halber sei ferner darauf hingewiesen, dass die Dämpfungsglieder 92 und 100 abweichend von der hier gezeigten, bevorzugten Ausführung auch mit einer größeren oder kleineren Anzahl an Leiterelementen und Magnetanordnungen realisiert sein könnten.

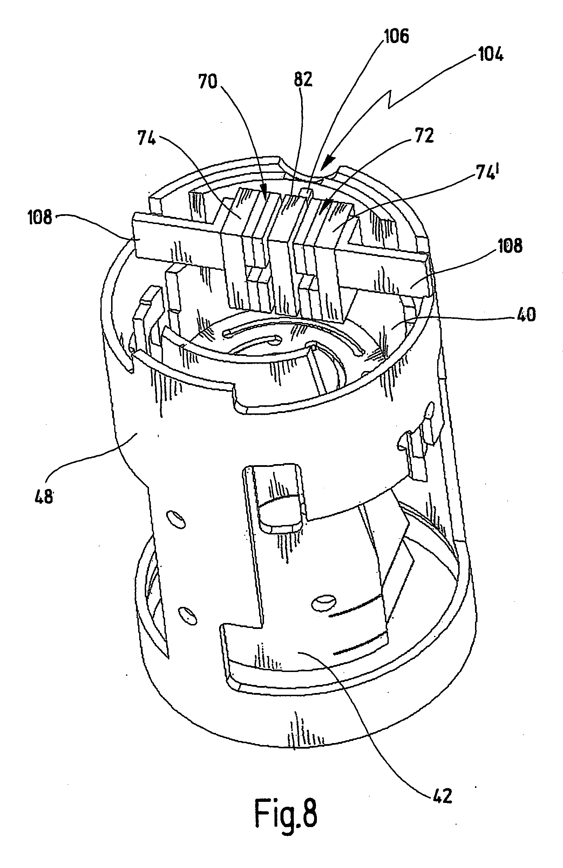

In Fig. 8 ist schließlich ein weiteres Ausführungsbeispiel eines Dämpfungsgliedes für den neuen Tastkopf in seiner Gesamtheit mit der Bezugsziffer 104 bezeichnet. Gleiche Bezugszeichen bezeichnen dieselben Elemente wie zuvor, wobei das Dämpfungsglied 104 hier schematisch in seiner räumlichen Anordnung relativ zu dem Kinematikmodul aus Fig. 2 dargestellt ist. Das Dämpfungsglied 104 dient hier allein zur Dämpfung einer Schwingung in z-Richtung und kann daher gut mit der Dämpfungsanordnung 100 aus Fig. 6, 7 kombiniert werden.

Bei dem Dämpfungsglied 104 ist das bewegliche Leiterelement 82 über ein Verbindungsstück 106 mit dem in z-Richtung beweglichen Trägerelement 40 des Doppelfederparallelogramms verbunden. Eine Magnetanordnung mit Magneten 70, 72 und Flussführungselementen 74, 74' sitzt demgegenüber ortsfest oberhalb der Membranfeder 38. Die Magnetanordnung entspricht hier in ihrem Aufbau der in Fig. 4 gezeigten Struktur. Sie ist über L-förmige Trägerelemente 108 an dem ortsfesten Gehäuseteil 48 befestigt.

In den hier gezeigten Ausführungsbeispielen besitzen die Magnetanordnungen jeweils nur einen Richtungswechsel in der Bewegungsrichtung der Leiterelemente. Es versteht sich jedoch, dass zur Optimierung der Dämpfungswirkung auch mehrere Magnete so miteinander kombiniert werden können, dass sich drei, vier oder noch mehr Richtungswechsel ergeben.

## Patentansprüche

1. Tastkopf für ein Koordinatenmessgerät (10), mit einem feststehenden ersten Teil (48), und einem relativ dazu beweglichen zweiten Teil, insbesondere einem Taststift (28) oder einem mit einem Taststift koppelbaren Zwischenelement (36), ferner mit einem Dämpfungsglied (92; 100; 104), das Schwingungen des beweglichen zweiten Teils (28, 36) bedämpft, wobei das Dämpfungsglied (92; 100; 104) eine Magnetanordnung (70, 72, 74, 88, 90; 86) zum Erzeugen eines Magnetfeldes (76, 78) und ein Leiterelement (82) aufweist, das entlang zumindest einer Bewegungsbahn (84) relativ zu dem Magnetfeld (76, 78) beweglich ist, **dadurch gekennzeichnet, dass** die Magnetanordnung (70, 72, 74, 88, 90; 86) so ausgebildet ist, dass entlang der zumindest einen Bewegungsbahn (84) zumindest ein Richtungswechsel des Magnetfeldes (76, 78) auftritt.

2. Tastkopf nach Anspruch 1, **dadurch gekennzeichnet, dass** der Richtungswechsel eine quer zur Bewegungsbahn (84) auftretende Richtungsumkehr ist.

3. Tastkopf nach Anspruch 1 oder 2, **dadurch gekennzeichnet, dass** die Magnetanordnung (70, 72, 74, 88, 90; 86) eine Vielzahl von Magneten (70, 72, 88, 90) beinhaltet, die über ein Magnetflussführungselement (74, 74') miteinander verbunden sind.

4. Tastkopf nach einem der Ansprüche 1 bis 3, **dadurch gekennzeichnet, dass** die Magnetanordnung (86) austauschbare Magneten (70, 72, 88, 90) beinhaltet.

5. Tastkopf für ein Koordinatenmessgerät nach einem der Ansprüche 1 bis 4, **dadurch gekennzeichnet, dass** das Dämpfungsglied (92; 100; 104) zumindest ein erstes und ein zweites Leiterelement (82a, 82b) aufweist, die um das bewegliche zweite Teil (36) herum an zumindest zwei umfänglich zueinander versetzten Positionen angeordnet sind.

6. Tastkopf nach Anspruch 5, **dadurch gekennzeichnet, dass** drei oder vier Leiterelemente (82a, 82b, 82c) gleichmäßig verteilt um das zweite Teil (36) herum angeordnet sind.

7. Tastkopf nach Anspruch 5 oder 6, **dadurch gekennzeichnet, dass** das erste und zweite Leiterelement (82a, 82b, 82c) separate Leiterelemente sind.

8. Tastkopf nach einem der Ansprüche 1 bis 7, **gekennzeichnet durch** ein Federelement (38), insbesondere eine Membranfeder, mit dem das zweite Teil (36) relativ zu dem ersten Teil (48) beweglich gelagert ist, wobei das Federelement (38) eine Bewegungsebene (98) definiert und wobei das Leiterelement (82) in einem orthogonalen Abstand (d) zu der Bewegungsebene (98) angeordnet ist.

9. Tastkopf nach einem der Ansprüche 1 bis 7, **gekennzeichnet durch** ein Federelement (38), insbesondere eine Membranfeder, mit dem das zweite Teil (36) relativ zu dem ersten Teil (48) beweglich gelagert ist, wobei das Federelement (38) eine Bewegungsebene (98) definiert und wobei das Leiterelement (82) auf Höhe der Bewegungsebene (98) angeordnet ist.

10. Tastkopf nach einem der Ansprüche 1 bis 9, **dadurch gekennzeichnet, dass** die Magnetanordnung (70, 72, 74) und das Leiterelement (82) unterschiedliches Gewicht besitzen, wobei das Schwerere der beiden an dem ersten Teil (48) befestigt.

11. Tastkopf nach einem der Ansprüche 1 bis 10, **dadurch gekennzeichnet, dass** das Leiterelement (82) an dem beweglichen Teil (36) befestigt ist.

12. Tastkopf nach einem der Ansprüche 1 bis 11, **dadurch gekennzeichnet, dass** das Leiterelement (82) austauschbar ist.

13. Tastkopf nach einem der Ansprüche 1 bis 12, **dadurch gekennzeichnet, dass** das Leiterelement (82) überwiegend aus Aluminium oder überwiegend aus Kupfer besteht.

14. Koordinatenmessgerät zum Vermessen einer Objektform eines Messobjekts (30), mit einem Verschiebegestell (14, 16, 18), an dem ein Tastkopf (26) mit einem Tastelement (28) zum Antasten des Messobjekts (30) angeordnet ist, und mit einer Auswerteeinheit (32), die dazu ausgebildet ist, eine aktuelle Raumposition des Tastelements (28) zu bestimmen, **gekennzeichnet durch** einen Tastkopf (26) nach einem der Ansprüche 1 bis 13.

## Claims

1. A probe for a coordinate measuring machine (10), comprising a stationary first part (48) and a second part which can move relative to said first part, with the second part particularly being a feeler pin (28) or an intermediate element (36) adapted to be coupled to a feeler pin, further comprising a damping member (92; 100; 104) for damping vibrations of the moveable second part (28, 36), with the damping member (92; 100; 104) having a magnet arrangement (70, 72, 74, 88, 90; 86) for producing a magnetic field (76, 78) and having a conductor element (82) which can move relative to the magnetic field (76, 78) along at least one path of movement (84), **characterized in that** the magnet arrangement (70, 72, 74, 88, 90; 86) is designed such that there is at least one change in direction of the magnetic field (76, 78) along the at least one path of movement (84).

2. The probe of claim 1, **characterized in that** the change in direction is a reversal of direction which occurs transverse to the path of movement (84).

3. The probe of claim 1 or 2, **characterized in that** the magnet arrangement (70, 72, 74, 88, 90; 86) comprises a plurality of magnets (70, 72, 88, 90) which are connected to one another by means of a magnetic-flux guide element (74, 74').

4. The probe of one of claims 1 to 3, **characterized in that** the magnet arrangement (86) comprises replaceable magnets (70, 72, 88, 90).

5. A probe for a coordinate measuring machine, in particular in accordance with one of claims 1 to 4, **characterized in that** the damping member (92; 100; 104) has at least one first and one second conductor element (82a, 82b) which are arranged around the moveable second part (36) in at least two positions which are circumferentially offset relative to one another.

6. The probe of claim 5, **characterized in that** three or four conductor elements (82a, 82b, 82c) are arranged such that they are uniformly distributed around the second part (36).

7. The probe of claim 5 or 6, **characterized in that** the first and second conductor elements (82a, 82b, 82c) are separate conductor elements.

8. The probe of one of claims 1 to 7, **characterized by** a spring element (38), in particular a diaphragm spring, by means of which the second part (36) is moveably mounted relative to the first part (48), with the spring element (38) defining a plane of movement (98), and with the conductor element (82) being arranged at an orthogonal distance (d) from the plane of movement (98).

9. The probe of one of claims 1 to 7, **characterized by** a spring element (38), in particular a diaphragm spring, by means of which the second part (36) is moveably mounted relative to the first part (48), with the spring element (38) defining a plane of movement (98), and with the conductor element (82) being arranged level with the plane of movement (98).

10. The probe of one of claims 1 to 9, **characterized in that** the magnet arrangement (70, 72, 74) and the conductor element (82) have different weights, with the heavier of the two being fixed to the first part (48).

11. The probe of one of claims 1 to 10, **characterized in that** the conductor element (82) is fixed to the moveable part (36).

12. The probe of one of claims 1 to 11, **characterized in that** the conductor element (82) is adapted to be replaced.

13. The probe of one of claims 1 to 12, **characterized in that** the conductor element (82) is composed predominantly of aluminum or predominantly of copper.

14. A coordinate measuring machine for measuring the shape of an object (30) to be measured, comprising a moving frame (14, 16, 18) supporting a probe (26) with a feeler element (28) for touching the object (30) to be measured, and comprising an evaluation device (32) which is designed for determining the current spatial position of the feeler element (28), **characterized by** a probe (26) according to one of claims 1 to 13.

## Revendications

1. Tête de palpage pour un appareil de mesure de coordonnées (10), comprenant une première partie fixe (48) et une deuxième partie mobile par rapport à celle-ci, notamment une pointe de palpage (28) ou un élément intermédiaire (36) qui peut être couplé avec une pointe de palpage, comprenant en outre un élément d'atténuation (92 ; 100 ; 104) qui atténue les oscillations de la deuxième partie (28, 36) mobile, l'élément d'atténuation (92 ; 100 ; 104) présentant un arrangement d'aimants (70, 72, 74, 88, 90 ; 86) pour générer un champ magnétique (76, 78) et un élément conducteur (82) qui est mobile le long d'au moins une trajectoire de déplacement (84) par rapport au champ magnétique (76, 78), **caractérisée en ce que** l'arrangement d'aimants (70, 72, 74, 88, 90 ; 86) est configuré de telle sorte qu'il se produit au moins un changement de direction du champ magnétique (76, 78) le long de l'au moins une trajectoire de déplacement (84).

2. Tête de palpage selon la revendication 1, **caractérisée en ce que** le changement de direction est une inversion de direction qui se produit transversalement par rapport à la trajectoire de déplacement (84).

3. Tête de palpage selon la revendication 1 ou 2, **caractérisée en ce que** l'arrangement d'aimants (70, 72, 74, 88, 90; 86) contient une pluralité d'aimants (70, 72, 88, 90) qui sont reliés entre eux par le biais d'un élément de guidage du flux magnétique (74, 74').

4. Tête de palpage selon l'une des revendications 1 à 3, **caractérisée en ce que** l'arrangement d'aimants (86) contient des aimants (70, 72, 88, 90) pouvant être remplacés.

5. Tête de palpage pour un appareil de mesure de coordonnées selon l'une des revendications 1 à 4, **caractérisée en ce que** l'élément d'atténuation (92 ; 100 ; 104) présente au moins un premier et un deuxième élément conducteur (82a, 82b), lesquels sont disposés en au moins deux positions décalées l'une par rapport à l'autre dans le sens du pourtour autour de la deuxième partie (36) mobile.

6. Tête de palpage selon la revendication 5, **caractérisée en ce que** trois ou quatre éléments conducteurs (82a, 82b, 82c) sont disposés avec répartition régulière autour de la deuxième partie (36).

7. Tête de palpage selon la revendication 5 ou 6, **caractérisée en ce que** le premier et le deuxième élément conducteur (82a, 82b, 82c) sont des éléments conducteurs séparés.

8. Tête de palpage selon l'une des revendications 1 à 7, **caractérisée par** un élément ressort (38), notamment un ressort à membrane avec lequel la deuxième partie (36) est supportée de manière mobile par rapport à la première partie (48), l'élément ressort (38) définissant un plan de déplacement (98) et l'élément conducteur (82) étant disposé à un écart orthogonal (d) par rapport au plan de déplacement (98).

9. Tête de palpage selon l'une des revendications 1 à 7, **caractérisée par** un élément ressort (38), notamment un ressort à membrane avec lequel la deuxième partie (36) est supportée de manière mobile par rapport à la première partie (48), l'élément ressort (38) définissant un plan de déplacement (98) et l'élément conducteur (82) étant disposé à hauteur du plan de déplacement (98).

10. Tête de palpage selon l'une des revendications 1 à 9, **caractérisée en ce que** l'arrangement d'aimants (70, 72, 74) et l'élément conducteur (82) possèdent des poids différents, le plus lourd des deux étant fixé à la première partie (48).

11. Tête de palpage selon l'une des revendications 1 à 10, **caractérisée en ce que** l'élément conducteur (82) est fixé à la partie mobile (36).

12. Tête de palpage selon l'une des revendications 1 à 11, **caractérisée en ce que** l'élément conducteur (82) peut être remplacé.

13. Tête de palpage selon l'une des revendications 1 à 12, **caractérisée en ce que** l'élément conducteur (82) se compose principalement d'aluminium ou principalement de cuivre.

14. Appareil de mesure de coordonnées pour mesurer la forme d'objet d'un objet à mesurer (30), comprenant un bâti coulissant (14, 16, 18) sur lequel est disposée une tête de palpage (26) munie d'un élément de palpage (28) pour palper l'objet à mesurer (30), et comprenant une unité d'interprétation (32) qui est configurée pour déterminer une position dans l'espace actuelle de l'élément de palpage (28), **caractérisé par** une tête de palpage (26) selon l'une des revendications 1 à 13.
